# EUROPEAN PATENT APPLICATION

(11) **EP 3 840 348 A1**
(43) Date of publication of application: **23.06.2021**
(21) Application number: 20196909.4
(22) Date of filing: 18.09.2020
(51) Int. Cl.: H04N 1/00

(54) **IMAGE PROCESSING APPARATUS AND CONTROL METHOD FOR IMAGE PROCESSING APPARATUS**

(30) Priority: 20.12.2019 JP 2019230155
(71) Applicant: Toshiba TEC Kabushiki Kaisha, Tokyo 141-8562 (JP)
(72) Inventor: AOYAMA, Ryuichi, Shinagawa-ku, Tokyo 141-8562 (JP)
(74) Representative: Bandpay & Greuter

(57) **Abstract**

An image processing apparatus includes a display, a memory that stores a firmware program for performing one or more basic functions of the image processing apparatus and a graphical user interface (GUI) function by which a GUI is displayed on the display, and a processor configured to, upon receipt of a first input operation corresponding to one of the basic functions via a first application program, execute the GUI function of the firmware program to generate a first GUI for accepting a second input operation related to the selected one of the basic functions, and control the display to display the first GUI via the application.

## Description

### FIELD

Embodiments described herein relate generally to an image processing apparatus and a method performed thereby.

### BACKGROUND

Conventionally, research and development have been conducted on an image processing apparatus capable of executing software applications ("apps") for extending functions of the image processing apparatus. These "apps" are different from firmware programs that generally are used for the basic functions of the image processing apparatus. Some apps extend the possible functions of the image processing apparatus by executing various scripts or the like.

Typically, a user of the image processing apparatus can use such functions provided by these apps by selection(s) through a graphical user interface (GUI). In other words, those applications are designed to generate a GUI so that the user can easily use their functions. However, since development of such GUI-providing applications is laborious and time-consuming, it is difficult for many third party developers to provide new applications for the image processing apparatus.

### BRIEF DESCRIPTION OF THE DRAWINGS

FIG. 1 is an external view of an image processing apparatus according to an embodiment.
FIG. 2 is a hardware diagram of an image processing apparatus.
FIG. 3 is a flowchart of a process performed by an image processing apparatus .
FIGs. 4-5 are diagrams illustrating example screens displayed via an application.

### DETAILED DESCRIPTION

To solve the above-cited problem, there is provided an image processing apparatus for which software programs (e.g., "apps")that are different from firmware can be easily developed.

An image processing apparatus includes a display, a memory that stores a firmware program for performing one or more basic functions of the image processing apparatus and a graphical user interface (GUI) function by which a GUI can be generated for displayed on the display, and a processor. The processor is configured to, upon receipt of a first input operation corresponding to a selection of one of the basic functions via a first application program, execute the GUI function to generate a first GUI for accepting a second input operation related to the selected one of the basic functions, and control the display to display the first GUI via the application.

Preferably, the second input operation is for setting a parameter related to the selected one of the basic functions.

Preferably, the first GUI accepts a third input operation for executing the selected one of the basic functions according to the set parameter.

Preferably, wherein the processor is further configured to, upon execution of the first application program, control the display to display a first screen by which the first input operation is received.

Preferably, the first GUI is displayed within the first screen.

Preferably, the first application program is a web browser, and the first screen is drawn using hypertext markup language (HTML).

Preferably, the first screen includes one or more buttons corresponding to the basic functions.

Preferably, the processor is further configured to, when one of the buttons on the first screen is selected, perform a script to call a particular function of the firmware program.

Preferably, the particular function is an application programming interface (API) function.

Preferably, the processor is further configured to, upon receipt of a fourth input operation via a second application program, execute the GUI function of the firmware program to generate a second GUI for accepting a fifth input operation related to another one of the basic functions.

Preferably, the basic functions include a printing function, a reading function, and an address book function.

The present invention further relates to a method of providing various application programs on an image processing apparatus, the method comprising: storing a firmware program providing basic functions of the image processing apparatus and a graphical user interface (GUI) function by which a GUI can be displayed on the display; upon receipt of a first input operation corresponding to a user selection of a first basic function via a first application program, executing the GUI function to generate a first GUI for accepting a second input operation related to the first basic function; and displaying the first GUI via the first application on the display.

Preferably, the second input operation is for setting a parameter related to the first basic function.

Preferably, the first GUI accepts a third input operation to execute the first basic function according to the set parameter.

The method may further comprise: upon execution of the first application program, displaying a first screen on which the first input operation can be received.

Preferably, the first GUI is displayed within the first screen.

Preferably, the first application program is a web browser, and the first screen is drawn using hypertext markup language (HTML).

Preferably, the first screen includes buttons corresponding to each of the basic functions, and the method further comprises: performing a script to call a particular function of the firmware program when one of the buttons is selected.

Preferably, the particular function is an application programming interface (API) function.

The method may further comprise a step of executing the GUI function of the firmware program to generate a second GUI for accepting a fifth input operation related to a second basic function upon receipt of a fourth input operation via a second application program.

Preferably, the basic functions include a printing function, a reading function, and an address book function.

Hereinafter, an image processing apparatus according to certain example embodiments will be described with reference to the drawings. In the drawings, the same or substantially similar components are denoted by the same reference numerals. Hereinafter, an image processing apparatus 100 according to one embodiment will be described.

### (Details of Image Processing Apparatus)

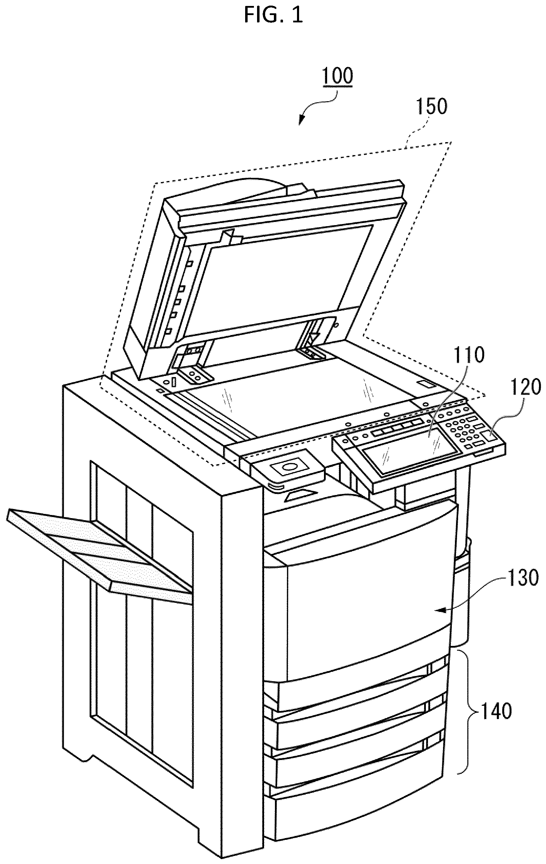

FIG. 1 is an external view of the image processing apparatus 100. The image processing apparatus 100 is, for example, an apparatus that performs image processing, such as a multifunction peripheral (MFP), a scanner, and a facsimile (FAX) machine. In this context, "image processing" is any process related to acquisition, production, manipulation, and/or transmission of an image. Image processing includes, for example, a process of forming an image on a sheet, a process of reading or otherwise acquiring image information, a process of recording or storing the image information, and a process of transmitting an image to another apparatus.

The image processing apparatus 100 includes a display 110, a control panel 120, a printer unit 130, a sheet storage unit 140, and an image reading unit 150. The printer unit 130 of the image processing apparatus 100 may be a device for fixing a toner image on a sheet, or may be an ink jet type device.

The image processing apparatus 100 generates digital data of an image by reading images printed on a sheet, and store the data in an image file. The sheet is, for example, a document or paper in which a character, an image, or the like is printed. The sheet may be any medium as long as it can be read by the image processing apparatus 100.

The display 110 is a display device such as a liquid crystal display, an organic EL (Electro Luminescence) display, or the like. The display 110 displays various kinds of information related to the image processing apparatus 100.

The control panel 120 includes a plurality of buttons. The control panel 120 receives an operation performed by a user. The control panel 120 outputs a signal corresponding to the operation performed by the user to the control unit of the image processing apparatus 100. The display 110 and the control panel 120 may be integrated into a touch-enabled display.

The printer unit 130 forms an image on the sheet based on image information generated by the image reading unit 150 or image information received through a communication path (e.g., a network connection). The printer unit 130 forms an image by, for example, the following processing. The image forming unit of the printer unit 130 forms an electrostatic latent image on a photosensitive drum based on the image information. The image forming unit of the printer unit 130 forms a visible image by attaching a developer to the electrostatic latent image. An example of the developer is a toner. The transfer unit of the printer unit 130 transfers the visible image onto the sheet. The fixing unit of the printer unit 130 fixes the visible image on the sheet by heating and pressing the sheet. Note that the sheet on which the image is formed may be a sheet accommodated in the sheet storage unit 140, or may be a sheet manually inserted.

The sheet storage unit 140 stores a sheet used for image formation in the printer unit 130.

The image reading unit 150 reads an image formed on a sheet as brightness and darkness signals of the light and generates image information. The image information may be transmitted to another information processing apparatus via a network. The image information may be formed on another sheet by the printer unit 130.

### (Hardware Configuration of Image Processing Apparatus)

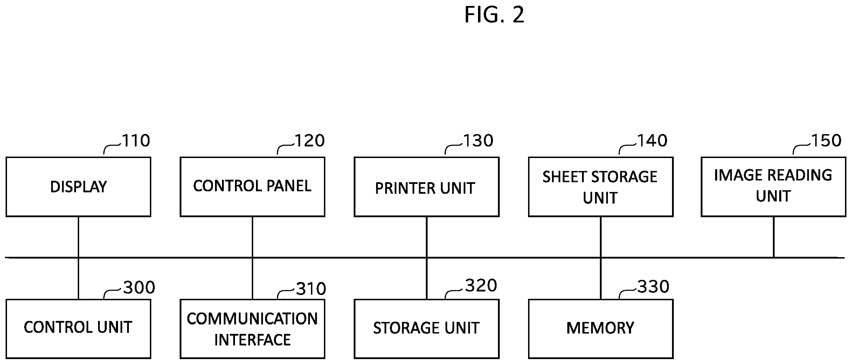

Hereinafter, with reference to FIG. 2, the hardware configuration of the image processing apparatus 100 will be described.

FIG. 2 is a hardware diagram of the image processing apparatus 100.

The image processing apparatus 100 includes a display 110, a control panel 120, a printer unit 130, a sheet storage unit 140, and an image reading unit 150. Furthermore, the image processing apparatus 100 includes a control unit 300 (processor), a communication interface 310, a storage unit 320, and a memory 330. These components of the image processing apparatus 100 are communicably connected to each other via a system bus.

The control unit 300 includes a central processing unit (CPU) of the image processing apparatus 100. The control unit 300 controls each component of the image processing apparatus 100. The control unit 300 executes programs and various types of processing. The control unit 300 executes appropriate processing according to an instruction input by the user via the control panel 120. That is, the control unit 300 recognizes an operation input by the user via the control panel 120, and executes the control processing on the basis of the input instruction.

Here, the programs executed by the control unit 300 include firmware and one or more applications. In this disclosure, the term "firmware" is used to mean a software program that performs a process related to a basic function or standard operations of the image processing apparatus 100, and the term "application" (or "app") is used to mean a software program that provides an additional function other than the basic function provided by firmware of the image processing apparatus 100.

In this context, a "basic function" is a function that can be provided in the image processing apparatus 100 without any additional (non-firmware) application software being installed thereon. For example, a basic function includes a printing function for forming an image on a sheet using the printer unit 130, an image reading function for reading image information from an image using the image reading unit 150, and the like. A basic function furthermore includes, for example, an address book search function for searching for information included in an address book stored in the storage unit 320, and the like, when such is a function is provided in the initial "out-of-the-box" state of the image processing apparatus 100. The information included in the address book includes at least one of a name, a company name, an address, a telephone number, a mail address. A basic function includes, for example, a FAX transmission function for transmitting an image by FAX, a FAX receiver function for receiving an image by FAX, and the like. The basic functions may include other functions included in place of or in addition to the functions described above.

In this context, an "additional function" is a function that becomes usable in the image processing apparatus 100 when an additional application is installed. For example, an additional function includes a function of a web browser. In such a case, the application would be a web browser. Furthermore, for example, an additional function includes a function of performing some type of image processing that is not provided as one the basic functions to the users of the image processing apparatus 100. Furthermore, an additional function includes a function of transmitting an image to a designated cloud server, and a function of receiving an image from a designated cloud server. Note that in some instances an additional function may be an extension of and/or a utilization of a basic function of the image processing apparatus 100 in some manner which may not be otherwise readily available to a user. Thus, for example, the additional function may be an enhancement in the performance, operability, and/or usability of a basic function.

The additional function is added to the image processing apparatus 100 when the application is installed thereon. The installed application is then executed by the control unit 300 according to the user's instruction.

Some or all of the applications may be installed by the user. Furthermore, some or all of the applications may be pre-installed together with the firmware at the time of factory shipment of the image processing apparatus 100.

Further, the firmware may itself provide an application programming interface (API) for the applications. An API is an interface for each app to access the basic functions provided by the firmware. That is, the API is an interface that enables the image processing apparatus 100 to control the basic function by using the additional function.

Hereinafter, for convenience of description, an execution of a process X1 by the control unit 300 as a process of the firmware will be described as the firmware performing the process X1. The process X1 may be any process as long as the process is executable by the firmware. Further, in the following description, for convenience of description, an execution of a process X2 performed by the control unit 300 as a process of the API in the firmware will be described as the API performing the process X2. The process X2 may be any process as long as the process is executable by the API. In addition, in the following description, for convenience of description, an execution of a process X3 by the control unit 300 as a process of an application (app) will be described as the application (app) performing the process X3. The process X3 may, in general, be any process as long as the process is executable by the application.

The application can output particular information to, and acquire particular information from, the firmware via the API. When the app acquires some piece of information from the firmware, this may be referred to the app acquiring the information via the API.

When the user installs a certain application in the image processing apparatus 100, the control unit 300 stores, in the storage unit 320, the application in accordance with the operation received from the user.

At that time, the control unit 300 performs, for example, a process of setting environment variables or parameters, thereby bringing the application stored in the storage unit 320 into a state in which the application can be executed. After the application is stored in the storage unit 320, the control unit 300 executes the application in accordance with the operation received from the user.

In a conventional image processing apparatus, a user can use at least a part of the basic function via an application that executes a particular script. The user can instruct execution of the function via a GUI generated by the application itself. However, development of such a GUI providing application is laborious and time-consuming.

However, in the present embodiment, the control unit 300 executes the firmware to generate operation reception image information corresponding to an operation reception image (e.g., a selection button image) provided for accepting an input operation for requesting performance of a first function based on a first operation received by a first application among one or more applications. The first application is an application selected for execution by the user from among the available applications and is thus being executed by the image processing apparatus 100. Here, the "first function" refers to a function selected by a first operation from among one or more basic functions. After the firmware generates operation reception image information, the control unit 300 causes the firmware to output the generated operation reception image information to the first application. Accordingly, the first application can acquire the operation reception image information and cause the display 110 to display the operation reception image corresponding to the acquired operation reception image information. This means that a developer of the first application does not need to implement a GUI function for the first application to accept an input operation for the first function. This means that the developer of the first app does not need to develop a GUI for a user to operate the first app. As a result, an application ("app") can be more easily developed for the image processing apparatus 100 as compared to the conventional image processing apparatus.

The communication interface 310 transmits and receives data to and from other devices. The communication interface 310 operates as an input interface and receives data transmitted from the other devices. In addition, the communication interface 310 operates as an output interface and transmits data to another device.

The storage unit 320 is, for example, an auxiliary storage device such as a hard disk, a solid state drive (SSD), or the like. The storage unit 320 stores various types of information. For example, the storage unit 320 stores one or more programs to be executed by the control unit 300. The programs include, for example, firmware, applications, or the like.

The memory 330 is, for example, a random access memory (RAM). The memory 330 temporarily stores information used by other components of the image processing apparatus 100. The memory 330 may store the image information read by the image reading unit 150, a program for operating each component, and the like.

### Processing for Displaying the Operation Reception Image

In the image processing apparatus 100, as described above, the operation reception image is displayed on display 110 via the first application. This is achieved by causing the firmware to generate the operation reception image information and provide this information to the first application from the firmware. In the following description, a description will be given of a process for the first application to display the operation reception image on the display 110 of the image processing apparatus 100.

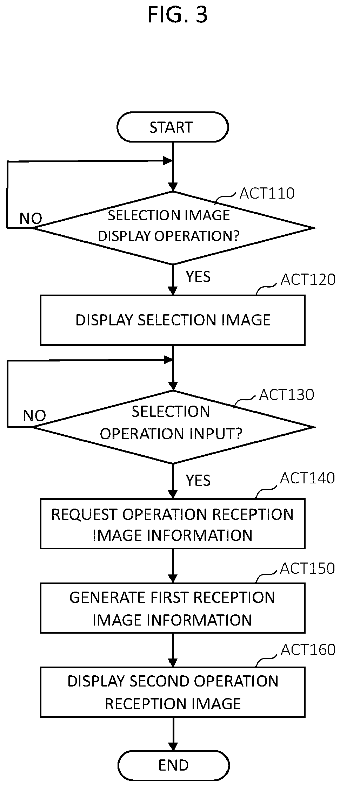

FIG. 3 is a flowchart of processing performed by the control unit 300 to cause the operation reception image to be displayed on the display 110. Hereinafter, a description will be given of a case in which the first application is already running (being executed) on the image processing apparatus 100. That is, a description will be given of a case where the first application has already been selected by the user from among one or more applications in the image processing apparatus 100. Here, in this example, the first application is a web browser. The first application may be any application as long as it is capable of displaying, on the display 110, the operation reception image corresponding to the acquired operation reception image information.

The first application waits until the selection image display operation is received (ACT 110). The selected image display operation is an operation requesting display of a selection image. In this context, the selection image is an image corresponding to a function that can be selected by the user from among one or more basic functions of the image processing apparatus 100. For example, the selection image is a button image or icon that a user can select. In the following description, in order to simplify the description, the basic functions of the image processing apparatus 100 are the print function, the image reading function, and the address book search function. The basic functions in other examples may include other functions, instead of or in addition to the print function, the image reading function, and the address book search function. Note that the selection image display operation may result from a previous selection of a button included on the control panel 120 or, when the control panel 120 is configured as a touch panel integrally with the display 110, the selection image display operation may result from a previous selection of key/button image displayed on the display 110.

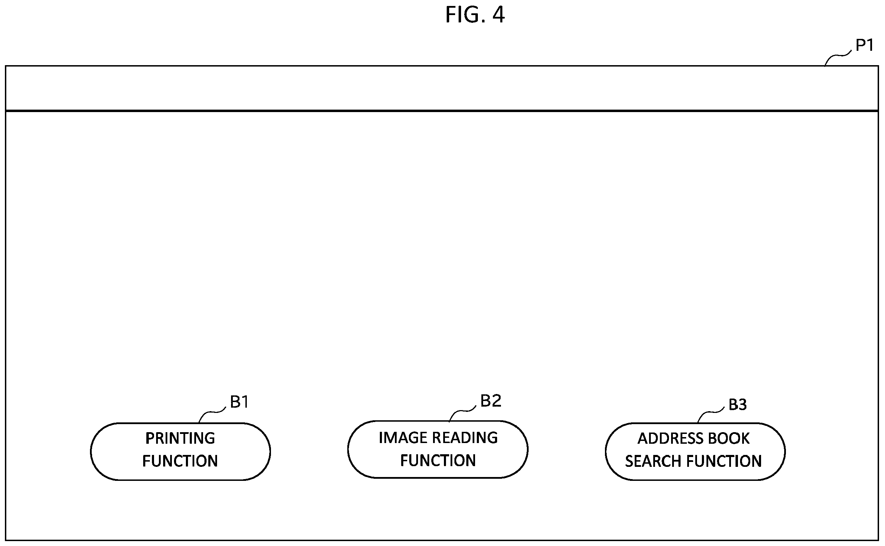

When the first application determines that the selected image display operation has been received (YES in ACT 110), the first application generates selection image information corresponding to a selection image. The selection image information is , for example, Hypertext markup language (HTML), cascading style sheets (CSS), and various scripts when the first application is a web browser. The first application draws (or otherwise outputs) the selection image indicated by the generated selection image information in a display area of the first application. Accordingly, in the image processing apparatus 100, the selection image is displayed on the display 110. That is, the first application causes the display 110 to display the selection image (ACT 120). Here, the selection image will be further described with reference to FIG. 4. FIG. 4 is a diagram of a selection image displayed on the display 110.

The image P1 illustrated in FIG. 4 shows an example of a selection image displayed in the display area of the first application. The image P1 (also referred to as a screen P1) includes, for example, three images: images B1 to B3. The image P1 may include other images in addition to the three images B1 to B3. In addition, the image P1 may include another image in place of one or more of the three images.

The image B1 is an image of a button for accepting an input from the user. In this example, image B1 is associated with the print function among the basic functions included in the image processing apparatus 100. Furthermore, the image B1 is associated with a first program which outputs a request to the API to acquire operation reception image information corresponding to an operation reception image for accepting an input operation related to the print function. For example, the first program is a script written in JavaScript®. The first program may be written in another script language or may be a program written in any programming language. Further, the image B1 may be an image of another input receiving type such as a pull-down menu, instead of a button. Hereinafter, for convenience of description, this operation reception image will be referred to as a first operation reception image, and the operation reception image information will be referred to as first operation reception image information.

When a selection operation (e.g., click, tap, touch, or the like) is made on the image B1, the first application executes the first program associated with the image B1. Accordingly, the first application notifies the API of the request to acquire the first operation reception image information. At this time, the first application notifies the API of one or more predetermined parameters corresponding to the request, along with the request. Those parameters are used by the API to generate the first operation reception image information. When the API acquires the parameters along with the request, the API generates the first operation reception image information based on the acquired parameters. Then, the API outputs the generated first operation reception image information to the first application as a response to the request. Accordingly, the first application generates (draws) the first operation reception image in the display area being utilized by the first application based on the first operation reception image information acquired from the API. As a result, the first operation reception image is displayed on the display 110.

The image B2 is an image of a button for accepting an input from the user. Further, the image B2 is associated with the image reading (scanning) function among the basic functions of the image processing apparatus 100. Further, the image B2 is associated with the second program, which notifies or outputs to the API a request to acquire operation reception image information corresponding to an operation reception image for accepting an input operation for the image reading function. For example, the second program is written in JavaScript®. The second program may be written in another script language or may be a program written in any programming language. Further, the image B2 may be an image of another input type, such as a pull-down menu, instead of a button. Hereinafter, for convenience of description, this operation reception image will be referred to as a second operation reception image, and the corresponding operation reception image information will be referred to as a second operation reception image information.

When a selection operation (e.g., click, tap, touch, or the like) is made on the image B2, the first application executes the second program associated with the image B2. Accordingly, the first application notifies the API of the request to acquire the second operation reception image information. At this time, the first application notifies the API of one or more predetermined parameters corresponding to the request, along with the request. Those predetermined parameters are used by the API to generate the second operation reception image information. When the API acquires the parameters along with the request, the API generates the second operation reception image information based on the acquired parameters. Then, the API outputs the generated second operation reception image information to the first application as a response to the request. Accordingly, the first application generates the second operation reception image in the display area of the first application based on the second operation reception image information acquired from the API. As a result, the second operation reception image is displayed on the display 110.

The image B3 is an image of a button for accepting an input from the user. Further, the image B3 is associated with the address book search function included as basic function in the image processing apparatus 100. Further, the image B3 is associated with a third program, which outputs a request to acquire the operation reception image information corresponding to the operation reception image for accepting the operation of the address book search function. For example, the third program is written in JavaScript®. The third program may be written in another script language or may be a program written in any programming language. Further, the image B3 may be an image of another input type, such as a pull-down menu, instead of a button. Hereinafter, for convenience of description, this operation reception image will be referred to as a third operation reception image, and the corresponding operation reception image information will be referred to as a third operation reception image information.

When a selection operation (e.g., click, tap, touch, or the like) is made on the image B3, the first application executes the third program associated with the image B3. Accordingly, the first application notifies the API of the request to acquire the third operation reception image information. At this time, the first application sends the API one or more predetermined parameters corresponding to the request, along with the request. Those parameters are used by the API to generate the third operation reception image information. When the API acquires the parameters along with the request, the API generates the third operation reception image information based on the acquired parameters. Then, the API outputs the generated third operation reception image information to the first application as a response to the request. Accordingly, the first application generates the third operation reception image in the display area of the first application based on the third operation reception image information acquired from the API. As a result, the third operation reception image is displayed on the display 110.

As described above, the image P1 includes three images: the image B1, the image B2, and the image B3. The user selects one image from these three images. As a result, the user can select a desired function to be used from among the three basic functions.

Note that, in some examples, the first application may be configured to output the selection image information to another application and cause the other application to display the selection image. In other words, the first application may be configured to cause the display 110 to display the selection image via another application. For example, when the first application is not a web browser, the first application outputs the selection image information to a web browser, and causes the web browser to display the selection image.

Next, the first application waits until an operation is input via the selection image displayed on the display 110 (ACT 130).

If it is determined that a selection operation has been input via a selection image (YES in ACT 130), the first application notifies the API of the request to acquire the operation reception image information corresponding to the operation reception image matching the received input operation (ACT 140). In addition, at this time, the first application notifies the API of one or more predetermined parameters corresponding to the request, together with the request. Here, the selection operation can be a selection of any one of the images B1 to B3 described above. In this example, it is assumed that the first application receives a selection operation for the image B2 via the selection image in ACT 140. In this case, in ACT 140, the first application notifies or outputs to the API the request to acquire the second operation reception image information.

Next, the API acquires one or more predetermined parameters corresponding to the request together with the request to acquire the second operation reception image information. Then, the API generates the second operation reception image data based on the acquired parameters (ACT 150). The second operation reception image information is written in, for example, HTML, CSS, various scripts, and the like when the first application is a web browser. After generating the second operation reception image information, the API outputs the generated second operation reception image information to the first application as a response to the request.

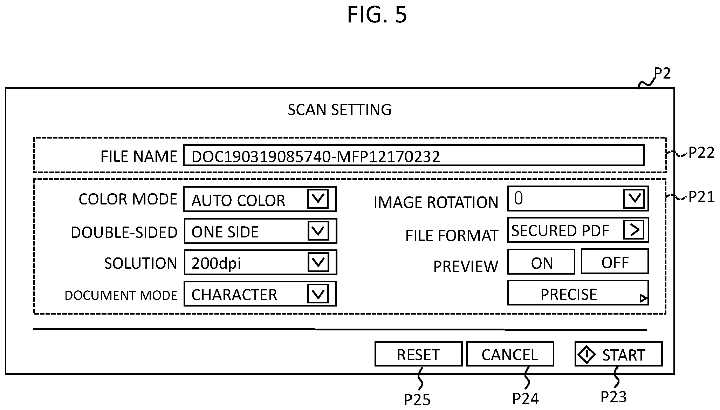

Next, the first application acquires the second operation reception image information as a response to the request notified to the API in ACT 140. The first application generates the second operation reception image displayed in the display area of the first application based on the acquired second operation reception image information. Accordingly, in the image processing apparatus 100, the second operation reception image is displayed on the display 110. That is, when the first application acquires the second operation reception image information, the first application causes the display 110 to display the second operation reception image based on the acquired second operation reception image information (ACT 160). Here, referring to FIG. 5, an example of the second operation receiving image will be described.

An image P2 illustrated in FIG. 5 is an example of the second operation reception image displayed in the display area of the display 110. In the example illustrated in FIG. 5, the image P2 includes an image P21 for accepting an operation for the user to input one or more setting values for the image reading function. In the example, the image P2 includes an image P22 that accepts an input of a file name of an image read by the image reading unit 150. In this example, the image P2 includes an image P23 for accepting an operation to start reading the image using the image reading unit 150. In this example, the image P2 includes an image P24 for accepting an operation to stop reading the image (a cancellation operation). In this example, the image P2 includes an image P25 for accepting an operation to reset the setting values to default values.

The image P2 may include an image for accepting another operation instead of some or all of the images P21 to P25. Further, the image P2 may include an additional image for receiving another operation, in addition to the images P21 to P25. Here, in the example, the setting values include a settings for a color mode and a double-sided image. In addition, in this example, the setting values include settings for a resolution, a document mode, an angle for rotating the image, a file format, and a preview image.

After the second operation reception image is displayed on the display 110 in ACT 160, the first application ends the processing.

As described above, the control unit 300 detects the first operation made on the first application among the one or more applications. Based on the first operation received by the first application, the control unit 300 causes the firmware to generate the operation reception image information. Then, the control unit 300 causes the firmware to output the operation reception image information generated by the firmware to the first application. Accordingly, the first application can acquire the operation reception image information and cause the display 110 to display the operation reception image indicated by the acquired operation reception image information. This means that a developer of the first application does not need to implement GUI functions for the first application, by which user operations are accepted. As a result, it becomes easier for third party developers to develop applications for the image processing apparatus 100.

In one embodiment, the first application described above may be configured to acquire the second operation reception image information and then transmit the acquired second operation reception image information to another external information processing terminal held by the user in ACT 160 illustrated in FIG. 3. In such a case, the information processing terminal displays the second operation reception image on a display of the information processing terminal based on the received second operation reception image information. The information processing terminal transmits information indicating the operation to the image processing apparatus 100 based on the operation received via the displayed second operation reception image. Then, when the image processing apparatus 100 receives the information, the first application receives the operation indicated by the received information and performs a process corresponding to the received operation. That is, in this case, the first application causes the information processing terminal to display the second operation reception image indicated by the second operation reception image information acquired by the first application. Even in this case, the application can be easily developed. The information processing terminal is, for example, a mobile phone terminal (e.g., smartphone), a tablet personal computer (PC), a notebook PC, a desktop PC, a personal digital assistant (PDA), or the like, but is not limited thereto.

In the case where the first function described above is the printing function, the setting values for the printing function include, for example, settings for a paper size, a printing density, and the like. In addition, in this case, the setting values include settings for an enlargement ratio or a reduction ratio, both side printing, and the like.

The operation of the API described in the flowchart illustrated in FIG. 3 may be performed by a second application among the one or more applications installed in the image processing apparatus 100 that is different from the first app. That is, the second application may perform the processing of ACT 150 instead of the API. In this case, in ACT 140, the first application notifies the second application of a request to acquire the operation reception image information indicating the operation reception image corresponding to the received operation. In this case, the first application notifies the second application of one or more predetermined parameters in response to the request, in ACT 140. In this case, in ACT 160, the first application acquires the operation reception image information as a response to the request that has been notified to the second application in ACT 140. The second application may be installed by a user. The second application may be installed in the image processing apparatus 100 together with the firmware at the time of factory shipment of the image processing apparatus 100.

In the case where the first function described above is the address book search function, the setting values for the address book search function include, for example, settings for a search key, a font, and the like.

As described above, the image processing apparatus 100 has the operation reception unit (in this example, the control panel 120), the storage unit (in this example, the storage unit 320), and the control unit (in the example, the control unit 300). The control panel 120 accepts a user operation. The storage unit 320 stores firmware that performs processing related to one or more basic functions of the image processing apparatus 100, and one or more applications. The control unit 300 executes the firmware and the applications corresponding to the operation input via the control panel 120. Further, based on a first operation accepted by a first application (e.g., a web browser), the control unit 300 causes the firmware to generate operation reception image information (e.g., the image P2 shown in FIG. 5) for accepting the operation of the first function corresponding to the first operation among the one or more basic functions, and causes the firmware to output of the operation reception image information generated by the firmware to the first application. Accordingly, software vendors that develop and provide applications for the image processing apparatus 100 can easily develop the applications without implementing GUI functions therefore.

Note that a program for performing the function of any configuration unit in an apparatus (for example, the image processing apparatus 100) described above may be recorded in a non-transitory computer-readable recording medium, and the program may be read and executed by a computer system. Note that a "computer system" herein includes hardware, an operating system (OS) and a peripheral device. A "computer-readable recording medium" refers here to a portable medium such as a flexible disk, a magneto-optical disk, a ROM, or a compact disk CD-ROM, and the like, as well as a storage device such as a hard disk built in the computer system. A "computer-readable recording medium" also includes a cloud-based computer system, cloud-based storage device, a server or the like from which a program can be transmitted via a network, such as the Internet, or a communication line such as a telephone line.

In general, the program may be provided in a distributed manner across a network, downloaded via network, or operated across a network from a computer system in which the program is stored in a storage device. The program in this context may be a program for realizing a part of the above-described functions when utilized in conjunction with another program or an operating system. Furthermore, in some examples, the program of an embodiment may be a so-called differential file or another program capable of performing the above-described function(s) of an embodiment in combination with a program already recorded in the computer system.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. An image processing apparatus, comprising:
a display (110);
a memory (330) that stores a firmware program for performing one or more basic functions of the image processing apparatus and a graphical user interface (GUI) function by which a GUI is displayed on the display; and
a processor (300) configured to:
upon receipt of a first input operation corresponding to selection of one of the basic functions via a first application program, execute the GUI function of the firmware program to generate a first GUI for accepting a second input operation related to the selected one of the basic functions, and
control the display to display the first GUI via the application.

2. The image processing apparatus according to claim 1, wherein the second input operation is for setting a parameter related to the selected one of the basic functions.

3. The image processing apparatus according to claim 2, wherein the first GUI accepts a third input operation for executing the selected one of the basic functions according to the set parameter.

4. The image processing apparatus according to any one of claims 1 to 3, wherein the processor is further configured to, upon execution of the first application program, control the display to display a first screen by which the first input operation is received.

5. The image processing apparatus according to claim 4, wherein the first GUI is displayed within the first screen.

6. The image processing apparatus according to claim 4 or 5, wherein the first application program is a web browser, and the first screen is drawn using hypertext markup language (HTML).

7. The image processing apparatus according to claim 6, wherein
the first screen includes one or more buttons corresponding to the basic functions, and
the processor is further configured to, when one of the buttons on the first screen is selected, perform a script to call a particular function of the firmware program.

8. The image processing apparatus according to claim 7, wherein the particular function is an application programming interface (API) function.

9. The image processing apparatus according to any one of claims 1 to 8, wherein the processor is further configured to, upon receipt of a fourth input operation via a second application program, execute the GUI function of the firmware program to generate a second GUI for accepting a fifth input operation related to another one of the basic functions.

10. The image processing apparatus according to any one of claims 1 to 9, wherein the basic functions include a printing function, a reading function, and an address book function.

11. A method of providing various application programs on an image processing apparatus, the method comprising:
storing a firmware program providing basic functions of the image processing apparatus and a graphical user interface (GUI) function by which a GUI can be displayed on the display;
upon receipt of a first input operation corresponding to a user selection of a first basic function via a first application program, executing the GUI function to generate a first GUI for accepting a second input operation related to the first basic function; and
displaying the first GUI via the first application on the display.

12. The method according to claim 11, wherein the second input operation is for setting a parameter related to the first basic function.

13. The method according to claim 12, wherein the first GUI accepts a third input operation to execute the first basic function according to the set parameter.

14. The method according to any one of claims 11 to 13, further comprising:
upon execution of the first application program, displaying a first screen on which the first input operation can be received.

15. The method according to claim 14, wherein the first GUI is displayed within the first screen.
